# FASCICULE DE BREVET EUROPEEN

(11) **EP 1 701 147 B1**
(45) Date de publication et mention de la délivrance du brevet: **23.04.2008**
(21) Numéro de dépôt: 05005241.4
(22) Date de dépôt: 10.03.2005
(51) Int. Cl.: G01M 3/08, G01M 3/38, B29C 47/02, B29C 47/92, B29D 23/00, G01B 11/02, A01G 25/02

(54) **Installation de fabrication de tuyaux et procédé de détection de défauts associé**
Vorrichtung zur Herstellung von Schläuchen und entsprechendes Verfahren zur Fehlerermittlung
Apparatus for producing pipes and method for corresponding fault detection

(43) Date de publication de la demande: 13.09.2006
(73) Titulaire: The Thomas Machines SA, 2108 Couvet (CH)
(72) Inventeur: Bach, Christian, 1586 Vallamand (CH); Kertscher, Eberhard, 1462 Yvonand (CH)
(74) Mandataire: Ravenel, Thierry Gérard Louis

(56) Documents cités:
- EP-A- 0 353 982
- FR-A- 2 727 890
- US-A- 3 302 450
- US-A- 5 170 658
- US-A- 5 324 371
- US-A- 5 744 779
- PATENT ABSTRACTS OF JAPAN vol. 2000, no. 15, 6 avril 2001 (2001-04-06) -& JP 2000 334812 A (SEKISUI CHEM CO LTD), 5 décembre 2000 (2000-12-05)
- PATENT ABSTRACTS OF JAPAN vol. 1999, no. 14, 22 décembre 1999 (1999-12-22) -& JP 11 264781 A (DAIDO STEEL CO LTD), 28 septembre 1999 (1999-09-28)

## Description

La présente invention est relative à une installation de fabrication de tuyaux d'irrigation goutte-à-goutte. Plus particulièrement, l'invention concerne une telle installation comprenant des moyens de contrôle en temps réel de la qualité des tuyaux produits. L'invention concerne notamment une telle installation comprenant un bac de refroidissement muni d'un dispositif de détection de fissures et de perforations, notamment de micro-perforations, dans la paroi du tuyau fabriqué.

L'invention concerne aussi un procédé pour la détection de fissures et de perforations dans la paroi d'un élément creux.

Il est de technique courante d'utiliser, pour certaines irrigations, des tuyaux dits "goutte-à-goutte". Il s'agit de tuyaux dont la paroi est percée, à des intervalles de distance fixés à l'avance, par des trous de petit diamètre par lesquels l'eau s'écoule dans le sol. Pour contrôler avec précision le débit des trous, on prévoit au niveau de chaque trou un limiteur de débit couramment appelé "goutteur" qui se compose d'une pièce en matière plastique creuse qui est collée sur la paroi interne du tuyau.

Dans les installations de fabrication de tuyaux d'irrigation goutte-à-goutte conventionelles, des goutteurs sont amenés de manière régulière dans un poste d'extrusion comprenant des moyens d'extrusion, de calibrage et de soudage à partir d'un dispositif d'approvisionnement tel qu'un bol centrifugeur et orienteur permettant de fournir des goutteurs selon une orientation déterminée. Dans le poste d'extrusion, le tuyau est produit en continu, calibré, et les goutteurs sont soudés à intervalles réguliers à la paroi intérieure du tuyau encore chaud afin qu'ils se collent contre celle-ci en fondant localement.

Après que les goutteurs ont été soudés à la face intérieure du tuyau, le tuyau est tiré par des moyens de traction à travers un bac de refroidissement à eau qui permet de refroidir l'ensemble tuyau-goutteurs, de sorte que la forme finale du tuyau est figée.

A la suite du bac de refroidissement, un poste de perçage réalise un trou dans la paroi du tuyau, au droit de chaque goutteur. Une telle installation est décrite dans le brevet US 5 744 779.

Il a été constaté que ce type d'installation pouvait produire des tuyaux dont la paroi comporte des défauts du type micro-perforations et/ou fissures. L'apparition des micro-perforations et des fissures peut avoir plusieurs origines. Elle peut être due notamment à la présence de poussières dans le poste d'extrusion, à une granulométrie trop élevée du noir de carbone présent dans la matière du tuyau, à un encrassage des moyens de calibrage, ou encore à un défaut lors du soudage des goutteurs.

Or, ces défauts ne sont généralement pas détectables à l'oeil nu, de sorte que des tuyaux peuvent être produits puis livrés au client sans que les défauts aient été détectés, et sans qu'il ait été remédié aux dysfonctionnements à l'origine de ces défauts. Ces défauts se révèlent alors, après l'installation des tuyaux sur le terrain, par exemple sous la forme d'une consommation anormalement élevée en liquide d'irrigation.

Le document EP 0 353 982 décrit un dispositif permettant de détecter le manque d'étanchéité sur un tuyau extrudé dans un bac de refroidissement sans toutefois préciser les moyens permettant de réaliser cette détection ni comment ces moyens devraient être agencées en termes de structure et de fonctionnement.

La présente invention a pour but de remédier aux inconvénients susmentionnés ainsi qu'à d'autres encore en fournissant une installation de fabrication de tuyaux d'irrigation goutte à goutte munie de moyens pour détecter la présence de perforations et/ou de fissures dans la paroi des tuyaux d'irrigation fabriqués.

La présente invention a également pour but de fournir une telle installation mettant en oeuvre des moyens simples et peu coûteux.

A cet effet, la présente invention propose une installation pour la fabrication d'un tuyau d'irrigation goutte à goutte selon la revendication 1 du brevet.

Grâce à ces caractéristiques, les défauts dans le tuyau sont facilement détectés ce qui permet de prendre des mesures correctrices dans l'installation pour garantir la qualité de fabrication.

Selon une caractéristique avantageuse de l'invention, la zone d'analyse est située au voisinage de l'extrémité aval des moyens de calibrage, ce qui permet de détecter de manière précoce l'apparition de micro-perforations et/ou fissures dans la paroi du tuyau.

Selon une autre caractéristique avantageuse de l'invention, le bac de refroidissement comporte une portion de paroi transparente, dite fenêtre de visualisation, et l'objectif de la caméra est agencé derrière la fenêtre de visualisation, à l'extérieur du bac de refroidissement. Cet agencement particulier facilite l'implantation de la caméra dans l'installation, notamment sur le plan de l'étanchéité, et il permet d'obtenir des images de qualité suffisante pour le traitement des images par le circuit électronique d'analyse.

Selon encore d'autres caractéristiques avantageuses de l'invention, des moyens de nettoyage de la fenêtre de visualisation et des moyens d'éclairage du liquide de refroidissement sont prévus de manière à assurer une bonne qualité des images prises par la caméra.

De plus, selon un mode de réalisation avantageux de l'invention, le dispositif de détection est lié à un dispositif de signalisation et à une unité centrale de manière à commander par exemple le changement de bobine lorsqu'une bulle de gaz est détectée de manière à perdre le moins possible de tube.

La présente invention propose aussi un procédé pour la détection de perforations et/ou de fissures dans la paroi d'un élément creux comportant une paroi périphérique qui délimite une chambre intérieure soumise à la pression d'un gaz tel que de l'air atmosphérique selon la revendication 10.

D'autres caractéristiques et avantages de la présente invention ressortiront plus clairement de la description détaillée qui suit d'un exemple de réalisation de l'installation selon l'invention, cet exemple étant donné à titre purement illustratif et non limitatif seulement, en liaison avec les dessins annexés sur lesquels :
- la figure 1 est une représentation schématique d'une installation pour la fabrication de tuyaux d'irrigation du type goutte-à-goutte selon l'invention ;
- la figure 2 est une vue selon le plan de coupe 2-2 qui représente schématiquement l'agencement du dispositif de détection au voisinage du poste d'extrusion de l'installation de la figure 1 ;
- la figure 3 est une vue selon le plan de coupe 3-3 qui représente schématiquement le dispositif de détection de l'installation de la figure 1 ; et
- la figure 4 est une représentation schématique d'un écran de contrôle de la caméra utilisée dans l'installation de l'invention.

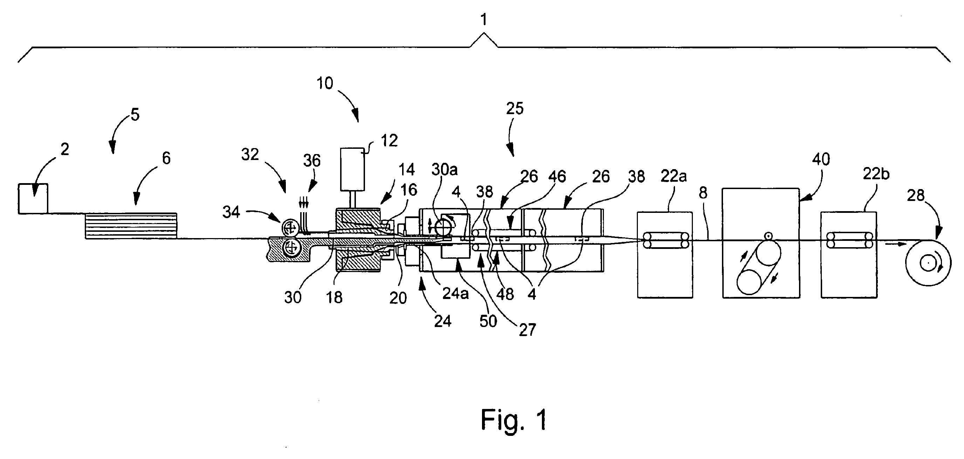

La figure 1 est une représentation schématique d'une installation pour la fabrication de tuyaux d'irrigation du type goutte-à-goutte. Désignée dans son ensemble par la référence numérique générale 1, cette installation comprend notamment un poste d'alimentation 5 en goutteurs 4 qui est suivi d'un poste d'extrusion 10 du tuyau 8 et d'un poste de refroidissement 25 du tuyau 8.

Le poste d'alimentation 5 comprend un magasin 2 tel qu'un bol centrifugeur qui permet de trier, d'orienter et de positionner des goutteurs 4 dans un dispositif accumulateur 6 en conformité avec la position qu'ils devront avoir une fois qu'ils seront introduits dans le tuyau d'irrigation 8.

A la suite du dispositif accumulateur 6 est disposé le poste d'extrusion 10. Ce poste d'extrusion 10 comprend une chambre de fusion 12 de la matière plastique qui alimente un ensemble 14 pourvu d'une filière 16 à l'intérieur de laquelle est prévu un guide fil 18 disposé de telle façon qu'il sorte de la filière 16 une ébauche tubulaire 20. L'ébauche 20 est tirée par des postes de traction 22a et 22b en passant à travers des moyens de calibrage du tuyau et des moyens pour le soudage des goutteurs à la paroi intérieure du tuyau, et suivi d'un poste de refroidissement du tuyau, du type dans lequel le poste de refroidissement comporte un bac de refroidissement contenant un liquide de refroidissement dans lequel le tuyau est immergé, caractérisée en ce qu'il est prévu un dispositif de détection comportant une caméra qui prend des images d'une zone du liquide de refroidissement, dite zone d'analyse, comprenant au moins une portion de tuyau et un circuit électronique d'analyse qui détecte une modification de la géométrie du tuyau, par rapport à une géométrie de référence, de manière à en déduire un problème de stabilité de fabrication du tuyau à partir des images prises par la caméra.

D'autres caractéristiques et avantages de la présente invention ressortiront plus clairement de la description détaillée qui suit d'un exemple de réalisation de l'installation selon l'invention, cet exemple étant donné à titre purement illustratif et non limitatif seulement, en liaison avec les dessins annexés sur lesquels :
- la figure 1 est une représentation schématique d'une installation pour la fabrication de tuyaux d'irrigation du type goutte-à-goutte selon l'invention ;

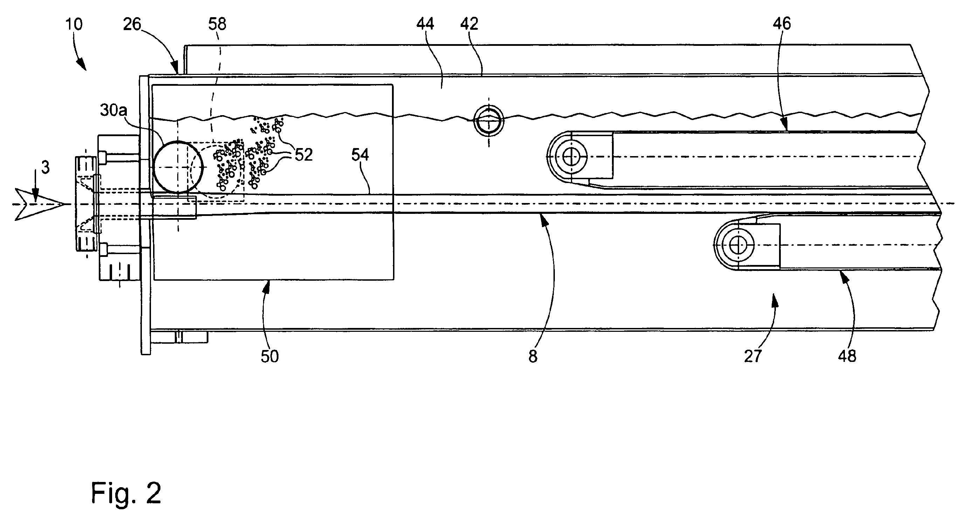

- la figure 2 est une vue selon le plan de coupe 2-2 qui représente schématiquement l'agencement du dispositif de détection au voisinage du poste d'extrusion de l'installation de la figure 1 ;

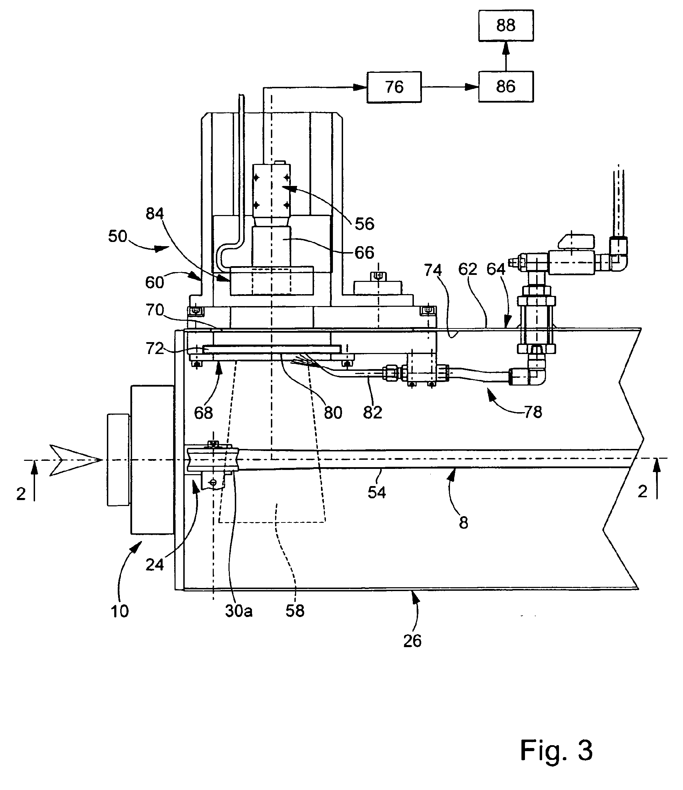

- la figure 3 est une vue selon le plan de coupe 3-3 qui représente schématiquement le dispositif de détection de l'installation de la figure 1 ; et

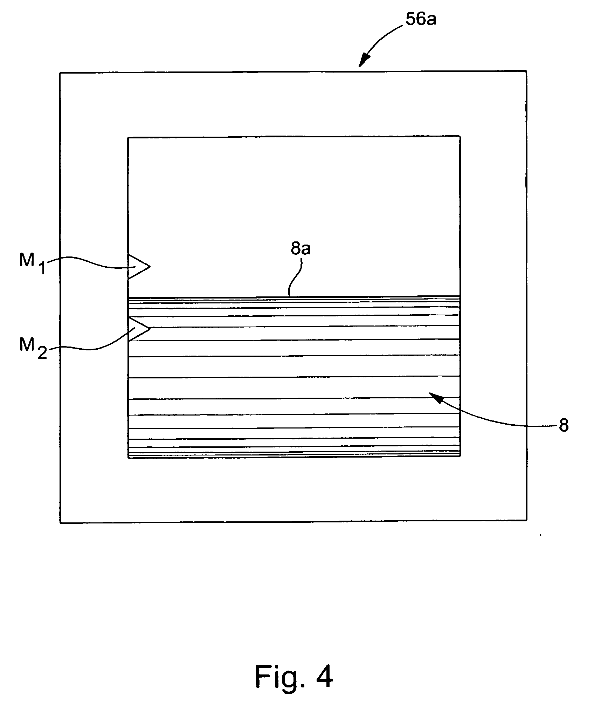

- la figure 4 est une représentation schématique d'un écran de contrôle de la caméra utilisée dans l'installation de l'invention.

La figure 1 est une représentation schématique d'une installation pour la fabrication de tuyaux d'irrigation du type goutte-à-goutte. Désignée dans son ensemble par la référence numérique générale 1, cette installation comprend notamment un poste d'alimentation 5 en goutteurs 4 qui est suivi d'un poste d'extrusion 10 du tuyau 8 et d'un poste de refroidissement 25 du tuyau 8.

Le poste d'alimentation 5 comprend un magasin 2 tel qu'un bol centrifugeur qui permet de trier, d'orienter et de positionner des goutteurs 4 dans un dispositif accumulateur 6 en conformité avec la position qu'ils devront avoir une fois qu'ils seront introduits dans le tuyau d'irrigation 8.

A la suite du dispositif accumulateur 6 est disposé le poste d'extrusion 10. Ce poste d'extrusion 10 comprend une chambre de fusion 12 de la matière plastique qui alimente un ensemble 14 pourvu d'une filière 16 à l'intérieur de laquelle est prévu un guide fil 18 disposé de telle façon qu'il sorte de la filière 16 une ébauche tubulaire 20. L'ébauche 20 est tirée par des postes de traction 22a et 22b en passant à travers des moyens de calibrage 24 et un poste de refroidissement 25 constitué par un bac de refroidissement 26. Au-delà du poste de traction 22b, le tuyau 8 est enroulé sur une bobine 28.

Dans la suite de la description, on utilisera à titre non limitatif une orientation de l'amont vers l'aval conformément au sens de défilement du tuyau 8 dans l'installation 1.

Une telle disposition est classique dans la technique de fabrication des tuyaux en matière plastique. Pour fixer les goutteurs 4, il est prévu que le guide fil 18 présente un passage axial à l'intérieur duquel est disposé un support de guidage 30 qui s'étend jusqu'à l'intérieur du calibreur 24a des moyens de calibrage 24. Le support de guidage 30 reçoit les goutteurs 4 à partir du magasin 2 via le dispositif accumulateur 6. Un dispositif doseur-entraîneur 32 muni, dans l'exemple représenté, de galets doseurs 34 assistés par des jets d'air 36 est prévu pour faire avancer les goutteurs 4 jusqu'à l'intérieur du calibreur 24a.

Dans le calibreur 24a, l'ébauche de tuyau 20, dont le diamètre est calibré par le calibreur 24a, est amenée en contact avec le goutteur 4 au moment où sa consistance est encore pâteuse à l'aide d'un galet presseur 30a, ce qui assure le thermo-soudage de la face supérieure 38 du goutteur 4 contre la paroi intérieure de l'ébauche 20. En sortant des moyens de calibrage 24 et du bac de refroidissement 26, le tuyau 8 pénètre dans un poste de perçage 40 via le premier poste de traction 22a puis en sort pour pénétrer dans le deuxième poste de traction 22b. Dans le poste de perçage 40, le tuyau 8 est percé de petits trous pratiqués en regard des goutteurs 4 et par lesquels l'eau s'écoulera.

Tel que représenté sur la figure 2, le bac de refroidissement 26 délimite une enceinte hermétique contenant un liquide de refroidissement. La paroi supérieure 42 du bac de refroidissement 26 délimite, avec la surface supérieure du liquide de refroidissement, une cavité 44. Des moyens d'aspiration (non représentés) sont prévus pour créer un vide dans cette cavité 44.

Selon le mode de réalisation représenté ici, un poste de stabilisation 27 est disposé en aval des moyens de soudage 30, 30a dans le bac de refroidissement 26 à vide. Dans l'exemple illustré, le poste de stabilisation 27 est immergé dans le liquide de refroidissement. Le poste de stabilisation 27 comprend une courroie sans fin supérieure 46 et une courroie sans fin inférieure 48 dont les brins inférieur et supérieur respectifs sont sensiblement rectilignes et parallèles. Ces brins sont appliqués contre des faces opposées du tuyau 8 sans affecter ses caractéristiques dimensionnelles et tout en assurant un entraînement et un guidage sans frottement du tuyau 8.

Conformément aux enseignements de l'invention, l'installation 1 est pourvue d'un dispositif de détection 50 qui détecte, dans le liquide de refroidissement, l'émission de bulles de gaz 52 à travers la paroi 54 du tuyau 8. Comme la partie intérieure du tuyau 8 est ici soumise globalement à la pression de l'air atmosphérique, les bulles de gaz 52 sont des bulles d'air atmosphérique.

Comme on l'a représenté sur la figure 3, le dispositif de détection 50 comporte une caméra 56 qui prend des images d'une zone de liquide de refroidissement, dite zone d'analyse 58, située au moins en partie au-dessus d'un tronçon du tuyau 8. La zone d'analyse 58 est définie globalement par le champ de vision de la caméra 56 et par la transparence du liquide de refroidissement.

La caméra 56 est agencée sur un support 60 qui est fixé sur la face externe 62 d'une paroi latérale 64 du bac de refroidissement 26. Ladite paroi latérale 64 comporte, en vis-à-vis de l'objectif 66 de la caméra 56, une portion transparente dite fenêtre de visualisation 68.

Selon le mode de réalisation représenté, la paroi latérale 64 comporte une ouverture 70 en vis-à-vis de l'objectif 66 et la fenêtre de visualisation 68 est constituée par une glace transparente 72 qui est rapportée, du côté de la face interne 74 de la paroi latérale 64. Bien entendu, la glace transparente 72 est fixée de manière étanche, de sorte que le liquide de refroidissement ne puisse s'écouler à travers l'ouverture 70 de la paroi latérale 64.

Le dispositif de détection 50 comporte un circuit électronique d'analyse 76 qui collecte les images prises par la caméra 56 et qui applique, de préférence à chaque image prise par la caméra 56, un algorithme de traitement d'image permettant de déceler la présence de bulles d'air 52 sur l'image. Avantageusement, cet algorithme comporte, pour chaque image analysée, au moins une étape de comparaison de l'image analysée avec une image de référence correspondant à la présence d'au moins une bulle 52 dans le liquide de refroidissement. Ainsi, le circuit d'analyse 76 possède en mémoire l'image d'une bulle 52, plus particulièrement l'image d'une bulle d'air 52 telle que celle qui peut apparaître en cas de micro-perforation et/ou de micro-fissure dans la paroi 54 du tuyau 8. Le circuit d'analyse 76 est donc en mesure de repérer, par analogie, la forme ronde d'une bulle 52 dans les images prises par la caméra 56.

Selon une variante de réalisation de l'invention, l'algorithme de traitement d'image mis en oeuvre par le circuit d'analyse 76 peut utiliser une image de référence qui correspond à une absence de bulle.

L'ensemble caméra 56 et circuit électronique d'analyse 76 est constitué par un système de vision approprié tel que ceux qui sont fabriqués par l'entreprise Matsushita Electric Works, sous la marque « NAIS » ou « Panasonic ».

Avantageusement, le bac de refroidissement 26 est équipé de moyens de nettoyage 78 de la face interne 80 de la glace transparente 72, de manière à éviter le dépôt d'impuretés et/ou de bulles d'air sur cette face interne 80, ce qui pourrait nuire à la qualité des images prises par la caméra 56.

Les moyens de nettoyage 78 comportent ici une buse 82 qui est portée par la paroi latérale 64 du bac de refroidissement 26 et qui est orientée vers la face interne 80 de la glace transparente 72. La buse 82 est raccordée, à travers la paroi latérale 64, à une source de liquide sous pression, de manière à produire un flux de liquide qui est projeté vers la glace transparente 72 et qui balaye au moins une partie de la glace transparente 72. La buse 82 est raccordée, par exemple, au dispositif (non représenté) qui alimente le bac de refroidissement 26 en liquide de refroidissement.

On note que les moyens de nettoyage 78 sont facultatifs.

Selon un mode de réalisation avantageux, le dispositif de détection 50 est équipé de moyens d'éclairage 84 du liquide de refroidissement de manière à améliorer la qualité des images prises par la caméra 56. Ces moyens d'éclairage 84 sont constitués ici par un dispositif annulaire de diffusion lumineuse qui est centré sur l'axe de l'objectif 66 de la caméra 56 et qui est monté autour de cet objectif 66, à l'extérieur du bac de refroidissement 26.

Le dispositif de détection 50 commande ici un dispositif de signalisation 86 qui produit un signal d'avertissement lorsqu'une bulle d'air 52 est détectée. Le signal d'avertissement est, par exemple, un signal lumineux et/ou un signal sonore, permettant à un opérateur de déceler l'apparition et l'origine d'un dysfonctionnement de l'installation 1.

De préférence, le dispositif de détection 50 est lié à une unité centrale 88 qui par exemple, commande automatiquement le changement de bobine 28 lorsqu'une bulle d'air 52 est détectée.

Le fonctionnement du dispositif de détection 50 selon l'invention est le suivant.

Pendant la fabrication du tuyau 8, la caméra 50 prend des images de la zone d'analyse 58. Le circuit électronique d'analyse 76 compare ces images avec une image de référence. En l'absence de perforations et/ou de fissures dans le tuyau 8, les images prises par la caméra 56 ne comprennent aucune bulle 52.

Comme l'intérieur du tuyau 8 est soumis à la pression atmosphérique de l'air ambiant, dès qu'une micro-perforation ou une micro-fissure apparaît dans la paroi 54 du tuyau 8, au moins une bulle d'air 52 s'échappe du tuyau 8 à travers cette micro-perforation ou cette micro-fissure, au moment où le tuyau 8 pénètre dans le liquide de refroidissement. Cette bulle d'air 52 remonte ensuite jusqu'à la surface du liquide de refroidissement.

Dès qu'une bulle d'air 52 s'échappe du tuyau 8, elle apparaît sur les images prises par la caméra 56, de sorte que le circuit électronique d'analyse 76 peut en déduire la présence d'au moins une micro-perforation ou micro-fissure. Le circuit électronique d'analyse 76 commande alors le dispositif de signalisation 86 pour qu'il produise un signal d'avertissement.

L'unité centrale 88 est informée, ici par le dispositif de signalisation 86, de la présence d'au moins une micro-perforation et/ou une micro-fissure, de sorte qu'elle provoque le changement de bobine 28.

On note que le procédé de détection mis en oeuvre par l'installation 1 selon l'invention peut s'appliquer à des produits autres que des tuyaux d'irrigation 8, en particulier à tout élément creux comportant une paroi périphérique 54 qui délimite une chambre intérieure soumise à la pression d'un gaz tel que de l'air atmosphérique.

Ce procédé comporte, successivement, une étape préalable au cours de laquelle l'élément creux 8 est plongé dans un bac 26 contenant un liquide ; une étape d'analyse au cours de laquelle la présence de bulles de gaz 52 est recherchée dans le bac 26 ; et une étape de détection au cours de laquelle un signal d'alerte est produit, dans le cas où au moins une bulle de gaz 52 est détectée à l'étape d'analyse, de manière à signaler la présence de perforations et/ou de fissures dans la paroi 54 de l'élément creux 8.

Selon un mode de réalisation avantageux, le dispositif de détection 50 de l'installation 10 selon l'invention est utilisé pour détecter une modification de la géométrie du tuyau 8, par rapport à une géométrie de référence. Par modification de la géométrie on entend une modification de la forme et/ou d'une dimension du tuyau, par exemple une augmentation ou une diminution de son diamètre. A cet effet, les images prises par la caméra 56 recouvrent au moins une portion du tuyau 8, et le circuit d'analyse 76 applique, à chaque image prise par la caméra 56, un algorithme de traitement d'image comportant au moins soit une étape de comparaison de l'image prise par la caméra 56 avec une image de référence correspondant à une géométrie de référence du tuyau 8, soit une étape de détermination de la position de la surface externe 8a du tuyau 8 par rapport à un ou plusieurs marqueurs M1, M2 de la caméra 56 comme cela est visible à la figure 4 qui représente schématiquement un écran de contrôle 56a de la caméra.

Ce mode de réalisation permet d'exploiter le dispositif de détection 50 pour détecter des problèmes de stabilité, voire des dysfonctionnements, dans le processus de fabrication du tuyau 8, qui se traduisent, par exemple, par une diminution du diamètre extérieur du tuyau 8. Il permet donc d'améliorer la fiabilité de l'installation 1 et la qualité du tuyau 8 produit.

Bien entendu, le dispositif de détection 50 peut être dédié à la détection d'une modification de la géométrie du tuyau 8, sans s'occuper de la détection de bulles de gaz. L'installation 1 selon l'invention peut aussi comporter un premier dispositif de détection 50 dédié à la détection des bulles de gaz 52 et un second dispositif de détection dédié à la détection d'une modification de géométrie du tuyau 8.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées. On pourra notamment prévoir d'utiliser, à la place d'un bac de refroidissement à vide comme cela vient d'être décrit, un bac de refroidissement sous pression atmosphérique. Un gaz sera injecté dans le tube en formation, par exemple depuis l'arrière de la tête d'extrusion pour que le tube conserve sa forme avant qu'il soit refroidi.

## Revendications

1. Installation (1) pour la fabrication d'un tuyau d'irrigation (8) goutte à goutte comprenant un poste d'alimentation (5) en goutteurs (4) suivi d'un poste d'extrusion (10) comprenant des moyens d'extrusion, des moyens de calibrage (24) du tuyau (8) et des moyens (30, 30a) pour le soudage des goutteurs (4) à la paroi intérieure du tuyau (8), et suivi d'un poste de refroidissement (25) du tuyau (8), du type dans lequel le poste de refroidissement (25) comporte un bac de refroidissement (26) contenant un liquide de refroidissement dans lequel le tuyau (8) est immergé, **caractérisée en ce qu'**il est prévu un dispositif de détection (50) qui détecte, dans le liquide de refroidissement, l'émission de bulles de gaz (52) à travers la paroi (54) du tuyau (8), de manière à en déduire la présence de perforations et/ou de fissures dans la paroi (54) du tuyau (8), **en ce que** le dispositif de détection (50) comporte une caméra (56) qui prend des images d'une zone du liquide de refroidissement, dite zone d'analyse (58), située au moins en partie au-dessus d'un tronçon du tuyau (8) et un circuit électronique d'analyse (76) qui détermine la présence des bulles de gaz (52) à partir des images prises par la caméra (56) et **en ce que** le circuit électronique d'analyse (76) applique, à chaque image prise par la caméra (56), un algorithme de traitement d'image comportant au moins une étape de comparaison de l'image prise par la caméra (56) avec une image de référence correspondant à la présence d'au moins une bulle de gaz (52).

2. Installation (1) selon la revendication 1, **caractérisée en ce que** la zone d'analyse (58) est située au voisinage de l'extrémité aval des moyens de calibrage (24), relativement au sens de défilement du tuyau (8) dans le liquide de refroidissement.

3. Installation (1) selon l'une quelconque des revendications 1 ou 2, **caractérisée en ce que** le bac de refroidissement (26) comporte une portion de paroi transparente, dite fenêtre de visualisation (68), et **en ce que** l'objectif (66) de la caméra (56) est agencé derrière la fenêtre de visualisation (68), à l'extérieur du bac de refroidissement (26).

4. Installation (1) selon la revendication précédente, **caractérisée en ce que** le bac de refroidissement (26) comporte des moyens de nettoyage (78) de la face interne (80) de la fenêtre de visualisation (68).

5. Installation (1) selon la revendication précédente, **caractérisée en ce que** les moyens de nettoyage (78) comportent au moins une buse (82) qui projette un flux de liquide sur la face interne (80) de la fenêtre de visualisation (68).

6. Installation (1) selon l'une quelconque des revendications 1 à 5, **caractérisée en ce que** le dispositif de détection (50) est équipé de moyens d'éclairage (84) du liquide de refroidissement de manière à améliorer la qualité des images prises par la caméra (56).

7. Installation (1) selon la revendication précédente, **caractérisée en ce que** les moyens d'éclairage (84) comportent un dispositif de diffusion lumineuse globalement annulaire qui est agencé autour de l'objectif (66) de la caméra (56).

8. Installation (1) selon l'une quelconque des revendications précédentes, **caractérisée en ce que** le dispositif de détection (50) commande un dispositif de signalisation (86) qui produit un signal d'avertissement lorsqu'une bulle de gaz (52) est détectée.

9. Installation (1) selon l'une quelconque des revendications précédentes, **caractérisée en ce que** le dispositif de détection (50) est lié à une unité centrale (88) qui commande un changement de bobine (28) lorsqu'une bulle de gaz (52) est détectée.

10. Procédé pour la détection de perforations et/ou de fissures dans la paroi (54) d'un élément creux (8) comportant une paroi périphérique (54) qui délimite une chambre intérieure soumise à la pression d'un gaz tel que de l'air atmosphérique, **caractérisé en ce qu'**il comporte les étapes successives suivantes :
- une étape préalable au cours de laquelle l'élément creux (8) est plongé dans un bac (26) contenant un liquide,
- une étape d'analyse au cours de laquelle la présence de bulles de gaz (52) est recherchée dans le bac (26), et
- une étape de détection au cours de laquelle un signal d'alerte est produit, dans le cas où au moins une bulle de gaz (52) est détectée à l'étape d'analyse, de manière à signaler la présence de perforations et/ou de fissures dans la paroi (54) de l'élément creux (8), dans lequel l'étape d'analyse comporte une phase d'analyse d'images d'une zone de liquide (58) située au moins partiellement au-dessus de l'élément creux (8), ledit procédé étant **caractérisé en ce que** la phase d'analyse d'images comporte une étape de comparaison d'une image de la zone de liquide (58) avec une image de référence correspondant à une absence de bulles de gaz (52).

11. Procédé selon la revendication 10, **caractérisé en ce que** l'élément creux est un tuyau (8).

## Claims

1. Installation (1) for manufacturing a drip irrigation pipe (8) including a dripper (4) feed station (5) followed by an extrusion station (10) including extrusion means, means (24) for calibrating the pipe (8) and means (30, 30a) for welding the drippers (4) to the inner wall of the pipe (8), and followed by a cooling station (25) for the pipe (8), of the type wherein the cooling station (25) includes a cooling tank (26) containing a cooling fluid in which the pipe (8) is immersed, **characterized in that** a detection device (50) is provided for detecting, in the cooling fluid, the emission of gas bubbles (52) through the wall (54) of the pipe (8), so as to deduce therefrom the presence of perforations and/or cracks in the wall (54) of the pipe (8), **in that** the detection device (50) includes a camera (56) which takes images of one area of the cooling fluid, called the analysis area (58), located at least partly above a section of the pipe (8) and an electronic analysis circuit (76) which determines the presence of gas bubbles (52) from the images taken by the camera (56) and **in that** the electronic analysis circuit (76) applies, to each image taken by the camera (56), an image processing algorithm including at least one step of comparing the image taken by the camera (56) with a reference image corresponding to the presence of at least one gas bubble (52).

2. Installation (1) according to claim 1, **characterized in that** the analysis area (58) is located in proximity to the downstream end of the calibrating means (24), relative to the direction in which the pipe (8) advances in the cooling fluid.

3. Installation (1) according to any one of claims 1 or 2, **characterized in that** the cooling tank (26) includes a transparent wall portion, called the observation window (68), and **in that** the lens (66) of the camera (56) is arranged behind the observation window (68), outside the cooling tank (26).

4. Installation (1) according to the preceding claim, **characterized in that** the cooling tank (26) includes means (78) for cleaning the inner face (80) of the observation window (68).

5. Installation (1) according to the preceding claim, **characterized in that** the cleaning means (78) include at least one nozzle (82) which projects a flow of liquid onto the inner face (80) of the observation window (68).

6. Installation (1) according to any one of claims 1 to 5, **characterized in that** the detection device (50) is fitted with means (84) for lighting the cooling fluid so as to improve the quality of the images taken by the camera (56).

7. Installation (1) according to the preceding claim, **characterized in that** the lighting means (84) include an overall annular light diffusion device which is arranged around the lens (66) of the camera (56).

8. Installation (1) according to any one of the preceding claims,
**characterized in that** the detection device (50) operates a warning device (86) which generates a warning signal when an air bubble (52) is detected.

9. Installation (1) according to any one of the preceding claims,
**characterized in that** the detection device (50) is connected to a central unit (88) which orders a change of spool (28) when an air bubble (52) is detected.

10. Method for detecting perforations and/or cracks in the wall (54) of a hollow element (8) including a peripheral wall (54) which delimits an inner chamber subject to a gas pressure such as atmospheric pressure, **characterized in that** it includes the following successive steps:
- an initial step during which the hollow element (8) is immersed in a tank (26) containing a fluid,
- an analysis step during which a search is made for the presence of gas bubbles (52) in the tank (26), and
- a detection step during which a warning signal is produced, if at least one gas bubble (52) is detected in the analysis step, so as to indicate the presence of perforations and/or cracks in the wall (54) of the hollow element (8), wherein the analysis step includes a phase of analysing the images of one area of fluid (58) located at least partially above the hollow element (8), said method being
**characterized in that** the image analysis phase includes a step of comparing an image of the fluid area (58) with a reference image corresponding to an absence of gas bubbles (52).

11. Method according to claim 10, **characterized in that** the hollow element is a pipe (8).

## Patentansprüche

1. Anlage (1) für die Herstellung eines Schlauchs (8) zur Tropfbewässerung, mit einer Station (5) für die Versorgung mit Tropfenspendern (4), gefolgt von einer Strangpressstation (10), die Strangpressmittel, Mittel (24) zum Kalibrieren des Schlauchs (8) und Mittel (30, 30a) zum Verschweißen der Tropfenspender (4) mit der Innenwand des Schlauchs (8) umfasst, und gefolgt von einer Station (25) zum Abkühlen des Schlauchs (8) des Typs, bei dem die Kühlungsstation (25) einen Kühlungsbehälter (26) aufweist, der eine Kühlungsflüssigkeit enthält, in die der Schlauch (8) getaucht wird, **dadurch gekennzeichnet, dass** eine Erfassungsvorrichtung (50) vorgesehen ist, die in der Kühlungsflüssigkeit das Ausströmen von Gasblasen (52) durch die Wand (54) des Schlauchs (8) erfasst, um daraus auf das Vorhandensein von Perforationen und/oder Rissen in der Wand (54) des Schlauchs (8) zu schließen, dass die Erfassungsvorrichtung (50) eine Kamera (56), die Bilder von einer Zone der Kühlungsflüssigkeit, der so genannten Analysezone (58), die sich wenigstens teilweise über einem Teilstück des Schlauchs (8) befindet, aufnimmt, und eine elektronische Analyseschaltung (76), die das Vorhandensein von Gasblasen (52) anhand der von der Kamera (56) aufgenommenen Bilder bestimmt, umfasst und dass die elektronische Analyseschaltung (76) bei jeder Bildaufnahme durch die Kamera (56) einen Bildverarbeitungsalgorithmus anwendet, der wenigstens einen Schritt des Vergleichens des durch die Kamera (56) aufgenommenen Bildes mit einem Referenzbild, das dem Vorhandensein von wenigstens einer Gasblase (52) entspricht, umfasst.

2. Installation (1) nach Anspruch 1, **dadurch gekennzeichnet, dass** sich die Analysezone (58) in der Umgebung des auslassseitigen Endes der Kalibrierungsmittel (24) in Bezug auf die Vorbeibewegungsrichtung des Schlauchs (8) in der Kühlungsflüssigkeit befindet.

3. Installation (1) nach einem der Ansprüche 1 oder 2, **dadurch gekennzeichnet, dass** der Kühlungsbehälter (26) einen durchsichtigen Wandabschnitt, der Beobachtungsfenster (68) genannt wird, aufweist und dass das Objektiv (66) der Kamera (56) hinter dem Beobachtungsfenster (68) außerhalb des Kühlungsbehälters (26) angeordnet ist.

4. Installation (1) nach dem vorhergehenden Anspruch, **dadurch gekennzeichnet, dass** der Kühlungsbehälter (26) Mittel (78) zum Reinigen der Innenfläche (80) des Beobachtungsfensters (68) umfasst.

5. Installation (1) nach dem vorhergehenden Anspruch, **dadurch gekennzeichnet, dass** die Reinigungsmittel (78) wenigstens eine Düse (82) umfassen, die einen Flüssigkeitsstrom auf die Innenfläche (80) des Beobachtungsfensters (68) ausspritzt.

6. Installation (1) nach einem der Ansprüche 1 bis 5, **dadurch gekennzeichnet, dass** die Erfassungsvorrichtung (50) mit Mitteln (84) zum Beleuchten der Kühlungsflüssigkeit ausgerüstet ist, derart, dass die Qualität der durch die Kamera (56) aufgenommenen Bilder verbessert wird.

7. Installation (1) nach dem vorhergehenden Anspruch, **dadurch gekennzeichnet, dass** die Beleuchtungsmittel (84) eine im Allgemeinen ringförmige Lichtstreuvorrichtung umfassen, die um das Objektiv (66) der Kamera (56) angeordnet ist.

8. Installation (1) nach einem der vorhergehenden Ansprüche, **dadurch gekennzeichnet, dass** die Erfassungsvorrichtung (50) eine Signalgebungsvorrichtung (86) steuert, die ein Vorsignal erzeugt, wenn eine Gasblase (52) erfasst wird.

9. Installation (1) nach einem der vorhergehenden Ansprüche, **dadurch gekennzeichnet, dass** die Erfassungsvorrichtung (50) mit einer Zentraleinheit (88) verbunden ist, die einen Wechsel der Haspel (28) befiehlt, wenn eine Gasblase (52) erfasst wird.

10. Verfahren zum Erfassen von Perforationen und/oder Rissen in der Wand (54) eines Hohlelements (8), das eine Umfangswand (54) aufweist, die eine Innenkammer begrenzt, die dem Druck eines Gases wie etwa der Atmosphärenluft unterworfen ist,
**dadurch gekennzeichnet, dass** es die folgenden aufeinander folgenden Schritte umfasst:
- einen vorhergehenden Schritt, in dessen Verlauf das Hohlelement (8) in einen eine Flüssigkeit enthaltenden Behälter (26) getaucht wird,
- einen Analyseschritt, in dessen Verlauf das Vorhandensein von Gasblasen (52) im Behälter (26) untersucht wird, und
- einen Erfassungsschritt, in dessen Verlauf ein Warnsignal erzeugt wird, falls im Analyseschritt wenigstens eine Gasblase (52) erfasst wird, derart, das das Vorhandensein von Perforationen und/oder Rissen in der Wand (54) des Hohlelements (8) gemeldet wird, wobei der Analyseschritt eine Phase des Analysierens von Bildern einer Flüssigkeitszone (58), die sich wenigstens teilweise über dem Hohlelement (8) befindet, umfasst, wobei das Verfahren **dadurch gekennzeichnet ist, dass** die Phase des Analysierens von Bildern einen Schritt des Vergleichens eines Bildes von der Flüssigkeitszone (58) mit einem Referenzbild, das der Abwesenheit von Gasblasen (52) entspricht, umfasst.

11. Verfahren nach Anspruch 10, **dadurch gekennzeichnet, dass** das Hohlelement ein Schlauch (8) ist.
